# EUROPÄISCHE PATENTANMELDUNG

(11) **EP 2 239 448 A1**
(43) Veröffentlichungstag der Anmeldung: **13.10.2010**
(21) Anmeldenummer: 10003413.1
(22) Anmeldetag: 30.03.2010
(51) Int. Cl.: F02G 1/043, F02G 5/00, F25B 27/02

(54) **Fahrzeug mit einer Verbrennungskraftmaschine und einer deren Abwärme nutzenden Wärmekraftmaschine als Antriebe**

(30) Priorität: 31.03.2009 DE 102009015693
(71) Anmelder: Hamberger, Walter, 97234 Albertshausen (DE)
(72) Erfinder: Hamberger, Walter, 97234 Albertshausen (DE)
(74) Vertreter: Pöhner, Wilfried Anton, Dr.

(57) **Zusammenfassung**

Fahrzeug, unter anderem bestehend aus wenigstens zwei Rädern und einer Verbrennungskraftmaschine und wenigstens einer Wärmekraftmaschine, der die Abwärme der Verbrennungskraftmaschine zugeführt wird, wobei beide Kraftmaschinen wenigstens je einen Innenraum aufweisen, der durch je einen bewegbaren Kolben vergrößerbar und verkleinerbar ist und der Innenraum der Wärmekraftmaschine mit einer Gasfüllung befüllt ist und die Kolben beider Kraftmaschinen mechanisch mit wenigstens einem Rad verbunden sind, wobei von den Gesamtabmessungen der Wärmekraftmaschine in Länge, Breite und Höhe einer der drei Werte kleiner ist als der kleinere der anderen beiden Werte und die beiden übrigen Werte etwa die gleiche Größenordnung aufweisen und der Hub des Kolbens der Wärmekraftmaschine kleiner ist als der Mittelwert aus Länge und Breite des Kolbens.

## Beschreibung

Die Erfindung bezieht sich auf einen Fahrzeug, unter anderem bestehend aus wenigstens zwei Rädern und einer Verbrennungskraftmaschine und wenigstens einer Wärmekraftmaschine, der die Abwärme der Verbrennungskraftmaschine zugeführt wird, wobei beide Kraftmaschinen wenigstens je einen Innenraum aufweisen, der durch je einen bewegbaren Kolben vergrößerbar und verkleinerbar ist und der Innenraum der Wärmekraftmaschine mit einer Gasfüllung befüllt ist und die Kolben beider Kraftmaschinen mechanisch mit wenigstens einem Rad verbunden sind.

Für den Antrieb von Fahrzeugen auf der Straße sind auf aktuellem Stand der Technik fast ausschließlich Verbrennungskraftmaschinen üblich, in deren meist zylinderförmigen Innenräumen ein leicht brennbares Gas und/oder eine leicht brennbare Flüssigkeit eingespritzt und gezündet wird, wodurch sie sich schlagartig ausdehnt und den Kolben im Zylinder nach außen drückt, sodass dieser mechanische Arbeit leisten kann - meist über ein Pleuel, das in die Verkröpfung einer Kurbelwelle eingreift oder auch durch einen rotierenden Kolben, der über Zahnräder mit der Abtriebswelle verbunden ist, wie z.B. beim Wankelmotor.

Ein ganz wesentlicher und dramatischer Nachteil der auf aktuellem Stand der Technik üblichen Verbrennungskraftmaschinen ist, dass sie in den meisten PKW nur einen Wirkungsgrad von rund 25 % für Benzinmotoren und rund 30 % für Dieselmotoren erzielen. Mit zunehmender Größe und der Hilfe zahlreicher Nebenaggregate kann der Wirkungsgrad beim Benzinmotor bis an 37 % heran gesteigert werden und beim Dieselmotor auf Grund der höheren spezifischen Energiedichte des Diesels bis an 45 % heran kommen. Nur für große Schiffsdiesel und stationäre Motore sind im Zweitaktverfahren bei Resonanzdrehzahl Wirkungsgrade bis in den Bereich von 50 % erreichbar.

Bei kleinen, schnell drehenden Benzin- und Dieselmotoren, wie sie z.B. im PKW benötigt werden, geht jedoch auch bei modernster Technologie rund 70 % der im Brennstoff gespeicherten Energie als Abwärme wieder verloren. Es liegt nahe, diese große Energiemenge nutzbar zu machen. Auf aktuellem Stand der Technik gibt es zahlreiche Vorschläge, diese Abwärme in einer Wärmekraftmaschine zum Antrieb von den verschiedenen Nebenaggregaten im Fahrzeug, wie z. B. der Lenkhydraulik, dem Starter, dem Bordnetz, der Klimaanlage oder anderen Funktionen nutzbar zu machen.

Die DE 199 53 940 beschreibt die Kombination aus einer Verbrennungskraftmaschine und einer Wärmekraftmaschine, die die Verlustwärme der Verbrennungskraftmaschine nutzt. Dabei wird die Wärmekraftmaschine ausdrücklich nur zum Antrieb von Nebenaggregaten vorgesehen. Die Nutzung der Wärmekraftmaschine als weiterer Antrieb für das Fahrzeug ist hier nicht ansatzweise erwähnt.

Die DE 10 2006 004 422 beschreibt die Kombination einer Verbrennungskraftmaschine mit einem Stirling-Motor, der die Abgaswärme des Verbrennungsmotors nutzt und einen Hydraulikmotor zum Antrieb von Hilfsaggregaten bewegt. Auch hier wird die Wärmekraftmaschine nur für den Antrieb des Hilfsaggregates eingesetzt.

Ganz allgemein gelten auf aktuellem Stand der Technik Wärmekraftmaschinen mit einer Zufuhr der Wärme von außen her als viel zu träge, um die Abgabe des Drehmomentes und die Drehzahl so schnell ändern zu können, wie es moderne Fahrzeugantriebe erfordern.

Auf diesem Hintergrund hat sich die Erfindung die Aufgabe gestellt, eine zusätzliche Wärmekraftmaschine zur Nutzung der Verlustwärme einer Verbrennungskraftmaschine zu entwickeln, die derart schnell ein Abtriebsdrehmoment aufbaut und auch wieder abbaut, dass sie mechanisch mit den Rädern des Fahrzeuges gekoppelt werden kann.

Als Lösung lehrt die Erfindung, dass von den Gesamtabmessungen der Wärmekraftmaschine in Länge, Breite und Höhe einer der drei Werte kleiner ist als der kleinere der anderen beiden Werte und die beiden übrigen Werte etwa die gleiche Größenordnung aufweisen und der Hub des Kolbens der Wärmekraftmaschine kleiner ist als der Mittelwert aus Länge und Breite des Kolbens.

Das wesentliche Merkmal der Erfindung ist eine Wärmekraftmaschine mit einer bisher in Fahrzeugen nicht eingesetzte Proportion. Ausgehend von dem Gedanken, dass zu einer schnellen Erwärmung und zu einer schnellen Abkühlung der Wände des Innenraums der Wärmekraftmaschine sowie der darin enthaltenen Gasfüllung eine relativ große Oberfläche erforderlich ist, hat die Erfindung etwa plattenförmige Dimensionen für die Gesamtabmessung der Wärmekraftmaschine gewählt.

Im allgemeinsten Fall ist von Länge, Breite und Höhe der Wärmekraftmaschine einer der drei Werte kleiner als der kleinere der anderen beiden Werte, wobei die beiden übrigen Werte etwa die gleiche Größenordnung aufweisen.

Die Oberfläche wird im Verhältnis zum Innenraum noch größer, wenn von den Gesamtabmessungen der Wärmekraftmaschine in Länge, Breite und Höhe der kleinste der drei Werte kleiner ist als etwa die Hälfte des größten Wertes.

Die Erfindung bevorzugt jedoch, dass der kleinste der drei Werte sogar kleiner ist als etwa ein Viertel des größten Wertes, weil dann die Oberfläche im Verhältnis zum Innenraum so groß ist, dass der Wärmeaustausch gegenüber dem bisherigen Stand der Technik dramatisch verbessert ist.

Das steht im Gegensatz zu der Form, die mit dem geringsten möglichen Aufwand ein Maximum an mechanischer Stabilität erreicht, nämlich einem etwa würfelförmigen Innenraum.

Das weitere, wesentliche Merkmal ist der Hub im Verhältnis zur Größe des Kolbens. Für diesen Parameter ergibt sich nach bisherigem Stand der Technik aus der festigkeitsmäßig optimalen Würfelform des Innenraums, dass Hub Kolbendurchmesser etwa gleich groß sind. Dann kann der hohe Arbeitsdruck mit dem relativ geringsten Bauaufwand abgefangen werden kann.

Die Erfindung geht hier jedoch einen anderen Weg, da durch einen relativ sehr geringen Hub des Kolbens auch sehr geringe Temperaturdifferenzen noch gut nutzbar werden. Die Abtriebsdrehzahl der Wärmekraftmaschine ist dann im Vergleich zu üblichen PKW-Motoren relativ langsam, aber die Regelbarkeit, d.h. also die Reaktionsgeschwindigkeit bei Änderung der Temperatur erheblich verbessert.

Deshalb sollte der Hub des Kolbens zumindest kleiner sein als der Mittelwert aus Länge und Breite des Kolbens. Interessanter ist, dass er kleiner ist als die Hälfte des Mittelwertes aus Länge und Breite des Kolben und die bevorzugte Ausführungsform hat einen nur derart kurzen Kolbenhub, dass er kleiner ist als ¼ des Mittelwertes aus Länge und Breite des Kolbens.

Ein derartiger Kolben kann - wie von Verbrennungskraftmaschinen bekannt- als ein Kolben konfiguriert werden, der in einem Innenraum mit durchgehend gleichem Profil oszilliert, wie z. B. ein Zylinder, der in einem hohlzylindrischen Innenraum bewegbar ist. Das Profil kann jedoch auch anders geformt sein, also elliptisch, oval oder sogar rechteckig, wobei eine Abrundung der Ecken zu bevorzugen ist.

Alternativ kann sich der Kolben anstelle einer linearen Bewegung auch um eine Achse verschwenken. Dann ist der Innenraum das Segment eines Torus, das von der Silhouette des Kolbens vorgegeben wird. Bei dem erfindungsgemäßen sehr großen Durchmesser des Kolbens im Verhältnis zum Hub, also bei einem sehr großen Umfang, ist dann der Kolben mit erheblich weniger Aufwand geometrisch exakt zu führen.

Wenn der Kolbenhub im Verhältnis zu den sonstigen Abmessungen sehr gering ist, dann ist es sinnvoll, den Kolben als eine Platte auszubilden, die durch einen membranartigen flexiblen Randstreifen mit den Rändern der Wand des Innenraums fest verbunden ist. Der Vorteil dieser Anordnung ist, dass keine gleitende Dichtung benötigt wird und deshalb auch keine Schmiermittel erforderlich sind, um die Dichtung nicht von der Wand des Innenraums aufzureiben. Stattdessen kann der flexible Teil der Dichtung z. B. durch aufgeschraubte oder aufgepresste, umlaufende Niederhaltungsringe effizient mit der Wandung des Innenraums verbunden werden. Die Dichtwirkung ist dann sehr hoch und die Gasfüllung bleibt im Innenraum. Von außen kommende Schadstoffe werden vom Innenraum fern gehalten.

Alternativ kann jeder Innenraum eines solchen Motors auch mit zwei unabhängig voneinander bewegbaren Arbeitskolben und einem Verdrängerkolben ausgerüstet werden. Dann arbeitet die Wärmekraftmaschine nach dem Stirling-Prinzip.

In einer anderen Variante ist für jeden Innenraum nur ein einziger Kolben vorgesehen, der den Innenraum zu einer Seite hin abschließt. Zusätzlich ist im Innenraum eine bewegbare Regeneratorplatte angeordnet, die an der dem Kolben gegenüberliegenden Wandung des Innenraumes anliegt. Diese Wandung wird auf ihrer äußeren Seite durch Kühlflüssigkeit, Schmierflüssigkeit, das Abgas oder ein anderes Transportmedium von der Verbrennungskraftmaschine kontinuierlich erhitzt.

Die Außenseite des Kolbens auf der anderen Seite des Innenraumes wird laufend durch Überstreichen mit das Fahrzeug umgebender Luft gekühlt.

Zur schnellen Übertragung der thermischen Energie von der heißen Wandung in die Gasfüllung der Wärmekraftmaschine wird die Regeneratorplatte zu Beginn des Arbeitshubes von einem Gestänge, das mechanisch mit dem Kolben verbunden ist, durch den Innenraum hindurch bis in die Nähe des (gekühlten) Kolbens bewegt und sofort wieder zurück. Dadurch wird die in der Regeneratorplatte gespeicherte thermische Energie zu einem ganz großen Teil auf die Gasfüllung des Innenraums übertragen, die dadurch expandiert und den Kolben aus dem Innenraum heraus bewegt.

Der Kolben wird durch Überstreichen mit der das Fahrzeug umgebenden Luft laufend abgekühlt, woraufhin sich die Gasfüllung abkühlt und wieder kontrahiert. Dadurch zieht sich der Kolben wieder in den Innenraum der Wärmekraftmaschine zurück und erwartet den nächsten Hub der Regeneratorplatte durch die Gasfüllung hindurch.

Durch die hin- und her bewegende Generatorplatte wird eine schnelle und diskontinuierliche Übertragung der thermischen Energie in die Gasfüllung ermöglicht. Mit dem Hub und dem Zeitpunkt der Bewegung der Regeneratorplatte kann die Wärmekraftmaschine geregelt werden: Wenn die Regeneratorplatte zu Beginn der von der jeweiligen Arbeitsdrehzahl des Abtriebs im Fahrzeug vorgegebenen Periode durch die Gasfüllung hin- und her bewegt wird, so wird die Gasfüllung erhitzt und drückt den Kolben aus den Innenraum heraus, sodass eine Arbeitsbewegung stattfindet. Dabei ist der Hub der Regeneratorplatte ein Maß für die gesamte Erwärmung. Wenn die Regeneratorplatte den größtmöglichen Weg durch den Innenraum der Wärmekraftmaschine zurücklegt, dann ist die Energieabgabe an die Gasfüllung maximal, wenn die Regeneratorplatte nur teilweise durch den Innenraum hindurchbewegt wird, ist auch die Energieübergabe geringer.

Eine andere, regelungstechnisch vorteilhafte Möglichkeit ist das aktive Verzögern der Wärmekraftmaschine, indem die Regeneratorplatte erst kurz vor dem Ende des von der jeweiligen Drehzahl vorgegebenen Arbeitshubes des Kolbens durch die Gasfüllung hin- und her bewegt wird. Dann erwärmt die Regeneratorplatte die Gasfüllung viel später als beim Beschleunigen, nämlich in ihrem größten Volumen, wodurch sie sich weiter ausdehnen möchte.

Bei der zeitlich anschließenden, von der Massenträgheit des Fahrzeuges auf den Kolben ausgeübten Kraft, die ihn wieder zurück in den Innenraum bewegt, stemmt sich die erhitzte und deshalb im Volumen ausgedehnte Gasfüllung dieser Bewegung des Kolbens entgegen, wodurch die Bewegung des Kolbens und damit auch die des Fahrzeuges gebremst wird. Durch die Druckerhöhung der mechanischen Bewegung wird die Gasfüllung weiter erhitzt. Über die Regeneratorplatte wird diese Temperaturerhöhung auf die Kühlflüssigkeit und/oder die Schmierflüssigkeit übertragen, die die Wärmekraftmaschine umspült.

Diese erhitzte Flüssigkeitsmenge kann während des Verzögerns in einem separaten Behälter zwischengelagert und bei einem anschließendem Beschleunigungsvorgang wieder zur Wärmekraftmaschine zurückgeführt werden, so dass ein rekuperativer Betrieb mit Rückgewinnung der beim Bremsen eingespeicherten Energie möglich wird.

Es ist jedoch auch ein Betrieb der Wärmekraftmaschine ohne eine Regeneratorplatte möglich. Stattdessen wird die Wärme von der Verbrennungskraftmaschine in Intervallen zugeführt: Entweder wird direkt von der Verbrennungskraftmaschine erhitzte Kühlflüssigkeit (oder ein erhitztes Schmiermittel) der Wärmekraftmaschine zugeleitet oder abgekühlte Kühlflüssigkeit, die in einem Wärmetauscher durch die Außenluft abgekühlt ist.

Ähnliches gilt für die Zuführung des erhitzten b.z.w. abgekühlten Schmiermittels der Verbrennungskraftmaschine.

Alternativ kann eine Wärmekraftmaschine im Arbeitshub von der Abgaswärme des Verbrennungsmotors und beim Rückhub dann wieder von der Außenluft umspült werden. Das dafür nötige, sehr schnelle Umschalten der Gasführungen muss von der Gesamtsteuerung der Maschine mit bewältigt werden. Gemäß heutigem Stand der Technik z.B. durch einen elektromechanischen Antrieb, der von einer elektronischen Steuerung geregelt wird.

Wie schon erwähnt, kann beim Verzögern oder Bremsen die in der Wärmekraftmaschine erwärmte heiße Kühlflüssigkeit und/oder heiße Schmierflüssigkeit in einem thermisch isolierten Speichertank geleitet werden und beim Beschleunigen wieder der Wärmekraftmaschine zugeführt werden. Dabei kann durch phasenrichtige Ansteuerung der Regeneratorplatte die erreichte Überhitzung der zwischengespeicherten Flüssigkeitsmenge noch weiter erhöht werden.

In einer weiteren Alternative ist es sinnvoll, dass die Kühlflüssigkeit vor der Einleitung in die Wärmekraftmaschine komprimiert wird. Dadurch bildet sich eine noch größere Temperaturdifferenz zwischen der "heißen Seite" und der "kalten Seite" der Wärmekraftmaschine aus, wodurch deren Wirkungsgrad deutlich ansteigt. Der dadurch erzielte Zugewinn an Energieausbeute ist höher als die zur Komprimierung primär erforderliche Energiemenge. Dieser Effekt ist auch als "Wärmepumpe" allseits bekannt.

Da die Wärmekraftmaschine mit der Verbrennungskraftmaschine mechanisch direkt gekoppelt ist, kann die Verbrennungskraftmaschine mit ihrer sehr schnellen Änderbarkeit der Energieabgabe regelungstechnisch der "Slave" zur Wärmekraftmaschine als "Master" sein. Das Fahrpedal des Fahrzeuges wirkt also als erstes Stellglied auf die Ansteuerung der Wärmekraftmaschine ein. Dabei noch auftretende Energiedefizite werden durch Erhöhung der Drehmomentabgabe der Verbrennungskraftmaschine ausgeglichen.

In einer weiteren, vorteilhaften Variante sind mehrere Wärmekraftmaschinen in einem Fahrzeug eingebaut, von denen jeweils eine auf die Kühlflüssigkeit, eine zweite auf die Schmierflüssigkeit und eine dritte auf das Abgas der Verbrennungskraftmaschine optimiert ist. Durch diese Aufteilung kann der Hub der jeweiligen Verbrennungskraftmaschine an die mittlere, abgegebene thermischen Energie dieser drei Energieträger angepasst werden.

In einer anderen, interessanten Variante ist die Integration mehrerer, plattenförmiger Wärmekraftmaschinen in den Rahmen oder die Karosserie des Fahrzeuges. Dabei ist es sinnvoll, die zu kühlenden Flächen der Wärmekraftmaschinen an der Unterseite oder der Außenseite des Fahrzeuges, z. B. in den Seitenwänden von Nutzfahrzeugen wie Kleintransportern, LKW oder Omnibussen anzuordnen.

Mehrere, aufgereihte Wärmekraftmaschinen können mit ihren Kolben über je einen Pleuel direkt auf Kröpfungen in einer Kardanwelle einwirken, die zwischen der Verbrennungskraftmaschine und einer Achse zwischen zwei Rädern verläuft.

Für einen möglichst schnellen Wärmeaustausch in der Wärmekraftmaschine ist es sinnvoll, dass die heiße Wandung auf wenigstens einer Seite mit zahlreichen Kühlrippen oder Kühldornen versehen wird. Alternativ oder zusätzlich kann sie als mehrfach gewellte Fläche geformt werden. Dadurch wird auch die mechanische Stabilität erhöht, ohne dass das Gewicht im gleichen Maße ansteigt.

Die Regeneratorplatte hat dann sinnvoller Weise eine zur heißen Wandung komplementäre Oberfläche, damit die thermische Energie möglichst schnell und effizient von der heißen Wandung auf die Regeneratorplatte übergeht.

Es zählt zu der besonderen Aufgabenstellung der Erfindung, dass die Leistungsänderung der Wärmekraftmaschine erheblich schneller ist als nach bisherigem Stand der Technik. Dazu wird vorgeschlagen, dass der Gasaustausch zwischen der kalten und der warmen Seite durch ein Ventil oder eine Drosselklappe im Innenraum der Wärmekraftmaschine reduziert wird.

Die Wärmeübertragung zwischen der Abwärme des Verbrennungsmotors und der Gasfüllung der Wärmekraftmaschine kann durch das Einbringen einer Isolierung reduziert werden. In gleicher Weise kann die Kühlung der Wärmekraftmaschine durch die Umgebungsluft des Fahrzeuges über eine kurzzeitige und vorübergehend eingebrachte Isolierung vermindert werden. Eine weitere Alternative ist die zu kühlende Seite kurzfristig sogar zu heizen, z. B. mit einer elektrischen Zusatzheizung oder durch noch verfügbare Restwärme aus der Verbrennungskraftmaschine oder aus anderen Speichermedien.

Ein anderes Prinzip zur Verzögerung der Wärmekraftmaschine ist die mechanische Ankopplung und vorübergehende Aktivierung einer Wirbelstrombremse und/oder eines Elektromotors und/oder eines Druckluftmotors und/oder eines Hydraulikmotors. Diese rotierenden Einheiten arbeiten dann bei der Bremsung des Fahrzeuges, also bei der Verzögerung der Wärmekraftmaschine, als Generator und produzieren Energie. Diese Energie kann entweder in einem externen Kühlelement in Wärme ungewandelt und abgestrahlt werden. Dadurch ist zwar der Wirkungsgrad etwas limitiert, aber die Gesamtkosten werden niedrig gehalten. Eine aufwändigere, aber effizientere Variante ist es, die bei dieser Verzögerung frei gewordene, thermische, elektrische oder mechanische Energie in einem entsprechenden Speicher für die spätere Verwendung bei einer erneuten Beschleunigung zwischen zu lagern.

Eine weitere Variante zur schnelleren Leistungsregulierung der Wärmekraftmaschine ist es, an ihren Innenraum einen zuschaltbaren Arbeitsspeicher für die Gasfüllung anzuschließen, wie z. B. einen Zylinder mit einem darin verschiebbaren Kolben, mit Hilfe dessen vor einer Beschleunigung das während einer Verzögerung darin gespeicherte Arbeitsmedium wieder in den Innenraum zurückgedrückt werden kann.

Eine weitere Verbesserung der schnellen Regelbarkeit des Motors bieten gewichtsreduzierte Kolben z. B. aus Aluminium oder aus Kohlenstoff oder einem anderen leichtgewichtigen Werkstoff mit einem sehr hohen Kohlenstoffanteil.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:

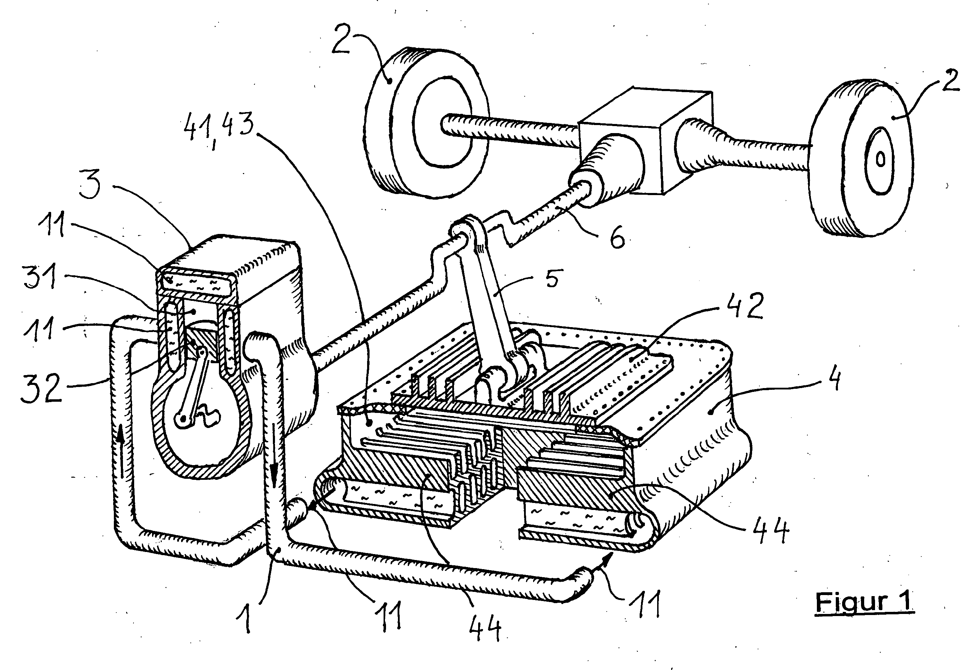

- Figur 1: Blockschaltbild wesentlicher Komponenten eines erfindungsgemäß angetriebenen Fahrzeuges

In Figur 1 sind wesentliche Komponenten eines erfindungsgemäß angetriebenen Fahrzeuges als dreidimensionales Blockschaltbild dargestellt. Links ist eine Verbrennungskraftmaschine (3) zum Antrieb des Fahrzeuges dargestellt. Sie ist zeichnerisch aufgeschnitten, sodass ihr Innenraum (31) sichtbar wird, in dem der Brennstoff verbrannt wird und den Kolben (32) nach unten drückt, sodass er mechanische Arbeit abgeben kann, die über die Kardanwelle (6) an die Räder (2) abgegeben wird.

Im Schnitt der Verbrennungskraftmaschine (3) sind die Kanäle für die Kühlflüssigkeit (11) zu erkennen, die ein Medium zum Transport der Abwärme (1) der Verbrennungskraftmaschine (3) ist. Die Kühlflüssigkeit (11) wird in diesem - stark vereinfachten - Blockschaltbild durch eine Rohrleitung zu einer Wärmekraftmaschine (4) geführt, die in Figur 1 zeichnerisch aufgeschnitten ist:

Sehr gut zu erkennen sind ihre erfindungsgemäß plattenförmigen Dimensionen: Der nach oben weisende Kolben (42) der Wärmekraftmaschine (4) bildet die eine der beiden großen Flächen, die jede Platte aufweist. Die ihr gegenüberliegende, andere große Fläche wird von der Wandung (44) der Wärmekraftmaschine (4) gebildet. Beide Flächen, also der Kolben (42) und die Wandung (44) sind mit Rippen ausgestattet, um eine möglichst große Oberfläche für einen verbesserten Übergang der thermischen Energie zu schaffen: Zahlreiche Kühlrippen auf der nach außen weisenden Fläche des Kolbens (42) können z. B. von der Außenluft umströmt werden, die das Fahrzeug umgibt. Ebenso weist die Wandung (44) an ihrer Innenseite zahlreiche Kühlrippen auf und an ihrer Außenseite weitere rippenartige Wände, die zu zahlreichen schmalen Kanälen verschlossen sind, durch die die Kühlflüssigkeit (11) fließt.

Zwischen diesen beiden Flächen - also zwischen dem Kolben (42) und der Wandung (44) - befindet sich der Innenraum (41) der Wärmekraftmaschine (4), der mit der Gasfüllung (43) befüllt ist.

In Figur 1 lässt sich der Arbeitstakt der Wärmekraftmaschine nachvollziehen: Die von der Verbrennungskraftmaschine (3) erzeugte Abwärme (1) fließt - zu einem wesentlichen Teil - mit der Kühlflüssigkeit (11) ab. Sie wird durch eine Rohrleitung an die Wandung (44) herangeführt, auf deren Außenseite zahlreiche Kanäle angeordnet sind, durch welche die Kühlflüssigkeit (11) hindurchströmt und dabei ihre Wärme an die Wandung (44) und von dort an die Rippen im Innenraum (41) ableitet. Dadurch wird die Gasfüllung (43) im Innenraum (41) erhitzt und dehnt sich aus.

Dabei drückt sie den plattenförmigen Kolben (42) nach oben. Er ist über die allseits umlaufende Membrane gegenüber dem Gehäuse der Wärmekraftmaschine (4) abgedichtet, jedoch dank der Flexibilität der Membrane Beweglich, was durch die Kreuzschraffierung der Schnittfläche dieser flexiblen Dichtung dargestellt ist. Bei seiner Aufwärtsbewegung bewegt der Kolben (42) das Pleuel (5), das in dieser vereinfachten Prinzipdarstellung direkt mit einer Kröpfung der Kardanwelle (6) verbunden ist und dadurch ein zusätzliches Drehmoment an die Kardanwelle (6) abgibt.

Nicht dargestellt ist in Figur 1 der Übersichtlichkeit halber die Rückwärtsbewegung des Kolbens (42), weil dazu noch weitere Zusatzeinrichtungen der Wärmekraftmaschine (4) dargestellt werden müssen:

Nicht dargestellt ist in Figur 1 eine Regenerationsplatte, die sich von der Wandung (44) aus in den Innenraum hinein bis in die Nähe des Kolbens (42) bewegen lässt und die Wärme von der Wandung (44) schnell in die Gasfüllung (43) hineinträgt. Ebenso fehlen die Mechanik und die Steuerung für die phasenrichtige Bewegung der Regenerationsplatte.

Ebenso ist in Figur 1 nicht dargestellt, dass alternativ zu einer Regenerationsplatte die Kühlflüssigkeit (11) auch abwechselnd zu einem von wenigstens zwei Wärmekraftmaschinen (4) zugeleitet werden kann, wobei der Wechsel der Zuleitung dem Arbeitstakt entsprechen muss. Nur während der Zuleitung läuft erhitzte Kühlflüssigkeit (11) in eine Wärmekraftmaschine (4), was in Figur 1 dargestellt ist. Für die Abwärtsbewegung des Kolbens (42) muss phasenrichtig abgekühlte Flüssigkeit (11) durch die jeweilige Wärmekraftmaschine (4) strömen.

Diese abgekühlte Flüssigkeit kann z. B. aus einer - nicht dargestellten - weiteren Wärmekraftmaschine (42) kommen. Alternativ kann sie aus einem - ebenfalls nicht gezeichneten - Kühler entnommen werden. Auch die dafür erforderlichen Umschaltventile samt deren Ansteuerung sind in Figur 1 der Übersichtlichkeit halber nicht enthalten.

### Bezugszeichenliste

- 1: Abwärme der Verbrennungskraftmaschine (3)
- 11: Kühlflüssigkeit zum Abtransport der Abwärme (1)
- 2: Räder des Fahrzeuges mit der Verbrennungskraftmaschine (3)
- 3: Verbrennungskraftmaschine zum Antrieb des Fahrzeuges
- 31: Innenraum in der Verbrennungskraftmaschine (3)
- 32: Kolben, vergrößert und verkleinert durch seine Bewegung den Innenraum (31)
- 4: Wärmekraftmaschine zum Aufnehmen von Abwärme (1) der Verbrennungskraftmaschine (3)
- 41: Innenraum in Wärmekraftmaschine (4)
- 42: Kolben, vergrößert und verkleinert den Innenraum (41)
- 43: Gasfüllung im Innenraum (41) der Wärmekraftmaschine (4)
- 44: Wandung des Innenraumes (41) gegenüber dem Kolben (42)
- 5: Pleuel, verbindet den Kolben (42) mit der Kardanwelle (6)
- 6: Kardanwelle, verbindet die Verbrennungskraftmaschine (3) mit Rädern (2)

## Patentansprüche

1. Fahrzeug, unter anderem bestehend aus
- wenigstens zwei Rädern (2) und
- einer Verbrennungskraftmaschine (3) und
- wenigstens einer Wärmekraftmaschine (4), der die Abwärme (1) der Verbrennungskraftmaschine (3) zugeführt wird,
- wobei beide Kraftmaschinen (3,4) wenigstens je einen Innenraum (31,41) aufweisen,
- der durch je einen bewegbaren Kolben (32,42) vergrößerbar und verkleinerbar ist und
- der Innenraum (41) der Wärmekraftmaschine (4) mit einer Gasfüllung (43) befüllt ist und
- die Kolben (32,42) beider Kraftmaschinen (3,4) mechanisch mit wenigstens einem Rad (2) verbunden sind,
**dadurch gekennzeichnet, dass**
- von den Gesamtabmessungen der Wärmekraftmaschine (4) in Länge, Breite und Höhe einer der drei Werte kleiner ist als der kleinere der anderen beiden Werte und die beiden übrigen Werte etwa die gleiche Größenordnung aufweisen und
- der Hub des Kolbens 41 der Wärmekraftmaschine (4) kleiner ist als der Mittelwert aus Länge und Breite des Kolbens (42).

2. Fahrzeug nach dem vorhergehenden Anspruch 1, **dadurch gekennzeichnet, dass** von den Gesamtabmessungen der Wärmekraftmaschine (4) in Länge, Breite und Höhe der kleinste der drei Werte kleiner ist als etwa die Hälfte oder bevorzugter Weise kleiner als etwa ein Viertel des größten Wertes.

3. Fahrzeug nach einem der vorhergehenden Ansprüche, **dadurch gekennzeichnet, dass** der Hub des Kolbens 41 der Wärmekraftmaschine (4) kleiner ist als etwa die Hälfte oder bevorzugter Weise kleiner als etwa ein Viertel des Mittelwertes aus Länge und Breite des Kolbens (42).

4. Fahrzeug nach einem der vorhergehenden Ansprüche, **dadurch gekennzeichnet, dass** der Kolben (42) als eine Platte ausgebildet ist, die über einen membranartigen, flexiblen Randstreifen mit den Rändern der Wand des Innenraums (41) verbunden ist.

5. Fahrzeug nach einem der vorhergehenden Ansprüche, **dadurch gekennzeichnet, dass**
- die dem Kolben (42) gegenüberliegende Wandung (44) des Innenraums (41) von einer Kühlflüssigkeit (11) oder einer Schmierflüssigkeit oder dem Abgas der Verbrennungskraftmaschine (3) kontinuierlich erhitzt wird und
- der Kolben (42) laufend durch Überstreichen mit der das Fahrzeug umgebenden Luft gekühlt wird und
- eine Regeneratorplatte intermittierend an der heißen Wandung (44) anliegt und mittels eines Gestänges, das mechanisch mit dem Kolben (42) verbunden ist, durch den Innenraum (41) hindurch bis in die Nähe des Kolbens (42) bewegbar ist und
- dabei die Gasfüllung (43) durch Kanäle in der Regeneratorplatte strömt, wobei
- der Kolben (42) erhitzt werden kann und die Regeneratorplatte intermittierend am Kolben (42) anliegen kann und die Wandung (42) gekühlt werden kann.

6. Fahrzeug nach Anspruch 5, **dadurch gekennzeichnet, dass** die Regeneratorplatte
- beim Beschleunigen zu Beginn oder
- beim Verzögern erst kurz vor dem Ende des von der jeweiligen Drehzahl vorgegebenen Arbeitshubes des Kolbens (42) durch die Gasfüllung hin- und her bewegt wird.

7. Fahrzeug nach einem der vorhergehenden Ansprüche,
**dadurch gekennzeichnet, dass** die Wärmekraftmaschine (4) allseits
- von der Kühlflüssigkeit (11) und /oder einer Schmierflüssigkeit der Verbrennungskraftmaschine (3) umspült wird, die
- abwechselnd von der Verbrennungskraftmaschine (3) erhitzt und
- dann wieder durch einen Wärmetauscher zur Außenluft hin abgekühlt wird.

8. Fahrzeug nach einem der vorhergehenden Ansprüche, **dadurch gekennzeichnet, dass** die Wärmekraftmaschine (4) abwechselnd vom Abgas der Verbrennungskraftmaschine (3) und von der Außenluft umspült wird.

9. Fahrzeug nach einem der vorhergehenden Ansprüche, **dadurch gekennzeichnet, dass** beim Verzögern oder Bremsen heiße Kühlflüssigkeit (11) und/oder heiße Schmierflüssigkeit an der Wärmekraftmaschine (4) vorbei jeweils in einen thermisch isolierten Speichertank geleitet wird und beim Beschleunigen wieder der Wärmekraftmaschine zugeführt wird, wobei die Kühlflüssigkeit (11) vor der Einleitung in die Wärmekraftmaschine (4) komprimiert werden kann.

10. Fahrzeug nach einem der vorhergehenden Ansprüche, **dadurch gekennzeichnet, dass**
- zur Regelung der Drehmomentabgabe der Wärmekraftmaschine (4) der Hub der Regenerationsplatte innerhalb des Innenraums (41) zur Erhöhung der Drehmomentabgabe vergrößerbar und zur Reduzierung der Drehmomentabgabe verkleinerbar wird, wobei
- zur Verstellung des Hubs und des Zeitpunktes der Bewegung der Regenerationsplatte ein elektrisches Stellglied vorhanden sein kann, das von einer elektronischen Steuerung ansteuerbar ist, welche zusätzlich das vom Fahrzeug jeweils benötigte Drehmoment, also die Winkelstellung eines "Gaspedals" abfragt und auswertet sowie die Temperaturen und die Strömungsgeschwindigkeit der Kühlflüssigkeit (11), der Schmierflüssigkeit und des Abgases sowie anderer, die Abwärme (1) der Verbrennungskraftmaschine (3) transportierenden Medien einliest und auswertet.

11. Fahrzeug nach einem der vorhergehenden Ansprüche, **dadurch gekennzeichnet, dass** mehrere Wärmekraftmaschinen (4) vorhanden sind, von denen jeweils eine von der Kühlflüssigkeit (11) oder der Schmierflüssigkeit oder dem Abgas der Verbrennungskraftmaschine (3) umspült wird.

12. Fahrzeug nach einem der vorhergehenden Ansprüche, **dadurch gekennzeichnet, dass** die Wärmekraftmaschinen (4) in den Rahmen oder die Karosserie des Fahrzeuges integriert sind, wobei die zu kühlende Fläche der Wärmekraftmaschinen zur Fahrzeugunterseite oder zur Fahrzeugaußenseite weisen kann.

13. Fahrzeug nach einem der vorhergehenden Ansprüche, **dadurch gekennzeichnet, dass** mehrere Wärmekraftmaschinen in einer Reihe angeordnet sind und deren Kolben (42) mit je einem Pleuel (5) direkt mit der Kardanwelle (6) zwischen der Verbrennungskraftmaschine (3) und einer Achse zwischen zwei Rädern (2) verbunden sind.

14. Fahrzeug nach Anspruch 5, **dadurch gekennzeichnet, dass** die heiße Wandung (41) auf wenigstens einer Seite mit zahlreichen Kühlrippen oder Kühldornen versehen ist oder als mehrfach gewellte Fläche geformt ist und/oder die Regeneratorplatte eine zur heißen Wandung (41) komplementäre Oberfläche aufweist.

15. Fahrzeug nach einem der vorhergehenden Ansprüche, **dadurch gekennzeichnet, dass** zur schnellen Leistungsreduzierung der Wärmekraftmaschine (4)
- der Gasaustausch zwischen der kalten und der warmen Seite durch ein Ventil oder eine Drosselklappe reduziert wird und/oder
- die Wärmeübertragung durch das Einbringen einer Isolierung reduziert wird und/oder
- die Kühlung durch das Einbringen einer Isolierung reduziert wird und/oder
- die zu kühlende Seite durch eine Heizung, z. B. elektrisch, erwärmt wird.

16. Fahrzeug nach einem der vorhergehenden Ansprüche, **dadurch gekennzeichnet, dass** zur Verzögerung der Wärmekraftmaschine (4)
- eine Wirbelstrombremse und/oder
- ein Elektromotor und/oder
- ein Druckluftmotor und/oder
- ein Hydraulikmotor angekuppelt oder aktiviert werden und die von diesen Einheiten produzierte Energie entweder zur späteren Verwendung bei einer erneuten Beschleunigung zwischengespeichert oder in einem externen Kühlelement in Wärme ungewandelt und abgestrahlt werden.

17. Fahrzeug nach einem der vorhergehenden Ansprüche, **dadurch gekennzeichnet, dass** zur schnellen Leistungsregulierung an den Innenraum (41) der Wärmekraftmaschine (4) ein zuschaltbarer Arbeitsspeicher anschließbar ist, wie z.B. ein Zylinder mit einem darin verschiebbaren Kolben, mit Hilfe dessen vor einer Beschleunigung das Arbeitsmedium wieder in den Innenraum (41) zurück drückbar ist.
